# NEUE EUROPÄISCHE PATENTSCHRIFT

(11) **EP 2 137 449 B2**
(45) Veröffentlichungstag und Bekanntmachung des Hinweises auf die Entscheidung über den Einspruch: **17.10.2018**
(45) Hinweis auf die Patenterteilung: 15.06.2011
(21) Anmeldenummer: 08735439.5
(22) Anmeldetag: 19.03.2008
(51) Int. Cl.: F16L 53/00

(54) **LEITUNGSVERBINDER FÜR MEDIENLEITUNGEN**
LINE CONNECTOR FOR MEDIA LINES
RACCORD POUR CONDUITES D'ACHEMINEMENT DE SUBSTANCES

(30) Priorität: 26.04.2007 DE 202007006115 U; 09.07.2007 DE 202007009588 U; 28.08.2007 DE 102007040786; 10.03.2008 DE 202008003365 U
(43) Veröffentlichungstag der Anmeldung: 30.12.2009
(60) Teilanmeldung: 11168387.6
(73) Patentinhaber: Voss Automotive GmbH, 51688 Wipperfürth (DE)
(72) Erfinder: BORGMEIER, Olav, 42499 Hückeswagen (DE); BRÜCK, Eduard, 51381 Leverkusen (DE); ERB, Ulrich, 51145 Köln-Porz (DE); GRÜNDEL, Reiner, 51647 Gummersbach (DE); LECHNER, Martin, 51789 Lindlar (DE); PETERS, Frank, 51789 Lindlar (DE); ROSENFELDT, Sascha, 44137 Dortmund (DE); SCHWARZKOPF, Otfried, 51515 Kürten (DE); GÜNDÜZ, Ahmet, 42897 Remscheid (DE); ISENBURG, Marco, 40885 Ratingen (DE)
(74) Vertreter: Patent- und Rechtsanwälte Dr. Solf & Zapf
(86) Internationale Anmeldenummer: PCT/EP2008/053295
(87) Internationale Veröffentlichungsnummer: WO 2008/131993

(56) Entgegenhaltungen:
- EP-A- 0 764 810
- EP-A- 1 710 484
- EP-A1- 1 513 227
- EP-A2- 0 219 126
- EP-A2- 1 777 452
- WO-A1-03/021087
- WO-A1-2005/124219
- DE-U1- 8 704 903
- DE-U1-202005 004 602
- DE-U1-202006 003 590
- JP-A- S51 123 223
- JP-A- 2005 193 614
- JP-U- S5 451 473
- US-A- 2 793 280
- US-A- 3 932 727
- US-A- 4 069 409
- US-A- 5 544 275
- US-A- 5 791 377
- US-A1- 2005 083 638
- US-B1- 6 617 556
- 'LEXIKON DER CHEMIE', 1999, SPEKTRUM AKADEMISCHEN VERLAG HEIDELBERG, BERLIN, ISBN 3-8274-0380-4 vol. BD 2, PAGES 218,219 UND 224. BD 3, PAGES 90 UND 91

## Beschreibung

Die vorliegende Erfindung betrifft einen Leitungsverbinder für Medienleitungen (Rohr- oder Schlauchleitungen insbesondere hydraulische Strömungsmedien) gemäß dem Oberbegriff des Anspruchs 1 oder des Anspruchs 3.

Des Weiteren bezieht sich die vorliegende Erfindung auf eine konfektionierte Medienleitung unter Verwendung eines derartigen Leitungsverbinders gemäß dem Oberbegriff des Anspruchs 10 oder des Anspruchs 12.

Derartige Leitungsverbinder -siehe z.B. DE 29721023 U1, DE 29922230 U1, DE 20008378 U1, DE 20319558 U1, DE 3741250 A1- dienen zum gegenseitigen Verbinden von mindestens zwei Medienleitungen oder zur Anschlussverbindung mindestens einer Leitung an einem beliebigen Aggregat, und zwar insbesondere in einem Kraftfahrzeug. Dabei werden häufig solche Medien über die Leitungen geführt, die auf Grund eines relativ hohen Gefrierpunktes bereits bei relativ hohen, je nach Witterung durchaus möglichen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie auch bei Leitungen für eine Harnstofflösung, die als NOₓ₋Reduktionsadditiv für Dieselmotoren mit so genannten SCR-Katalysatoren eingesetzt wird.

Die EP 1 777 452 A2 beschreibt einen beheizbaren Steckverbinder der gattungsgemäßen Art, bei dem seitlich neben dem Strömungskanal im Übergangsabschnitt ein plattenförmiges Heizelement angeordnet ist. Zusätzlich kann innerhalb des Kanals eine Heizlanze angeordnet sein.

Der vorliegenden Erfindung liegt die Aufgabe zu Grunde, einen Leitungsverbinder der genannten Art zu schaffen, der speziell für den genannten bevorzugten Anwendungsfall geeignet ist und noch effektiver ein Gefrieren des jeweiligen Mediums im Verbinderbereich verhindert. Des Weiteren liegt der Erfindung die Aufgabe zu Grunde, eine konfektionierte Leitung für den gleichen Zweck zur Verfügung zu stellen.

Erfindungsgemäß wird das durch die Merkmale des kennzeichnenden Teils des Anspruchs 1 oder des Anspruchs 3 erreicht. Vorteilhafte Ausgestaltungsmerkmale der Erfindung sind in den abhängigen Ansprüchen enthalten.
In Bezug auf die erfindungsgemäße konfektionierte Leitung wird die obige Aufgabe durch die Merkmale des kennzeichnenden Teils des Anspruchs 10 oder des Anspruchs 12 erreicht. Vorteilhafte Ausführungsformen hierzu sind in den abhängigen Ansprüchen enthalten.

Demnach sind erfindungsgemäß zumindest im Bereich des Übergangsabschnittes, d. h. außerhalb des oder der Anschlussabschnitte, elektrische Heizmittel in einer den Strömungskanal über seinen Umfang zumindest teilweise, bevorzugt aber vollständig über 360° umschließenden Anordnung vorgesehen, wobei das Verbinderstück mit den Heizmitteln von einer äußeren Kapselung umschlossen ist. Die Heizmittel können ein Einfrieren des jeweiligen Mediums innerhalb des Verbinderstückes vermeiden oder aufheben, indem ein z. B. über Nacht bei stehendem Fahrzeug eingefrorenes Medium aufgetaut wird. Dabei sind die Heizmittel derart konzipiert, dass eine definierte Beheizung bei guter elektrischer Isolation, gutem Wärmeübergang, guten mechanischen Eigenschaften und Schutz vor mechanischen Beschädigungen und Korrosion gewährleistet ist. Durch die erfindungsgemäße durchgehende Beheizung der konfektionierten Leitung über die gesamte Länge wird ein Schutz gegen Einfrieren über den gesamten Transportweg des Mediums gewährleistet.

Anhand von einigen in der Zeichnung veranschaulichten, bevorzugten Ausführungsbeispielen sollen die Erfindung, vorteilhafte Ausgestaltungen und erreichte Vorteile genauer erläutert werden. Dabei zeigen:
- Fig. 1: eine Perspektivansicht einer möglichen Ausführungsform eines nicht beanspruchten Leitungsverbinders, allerdings ohne Darstellung der Kapselung,
- Fig. 2: eine Perspektivansicht einer anderen Ausführungsform eines nicht beanspruchten Leitungsverbinders, wieder ohne Kapselung,
- Fig. 3: eine Perspektivansicht einer weiteren Ausführungsform eines nicht beanspruchten Leitungsverbinders, ohne Kapselung,
- Fig. 4: eine Perspektivansicht einer weiteren Ausführungsform eines nicht beanspruchten Leitungsverbinders, ohne Kapselung,
- Fig. 5: eine Perspektivansicht einer weiteren Ausführungsform eines nicht beanspruchten Leitungsverbinders, ohne die Kapselung,
- Fig. 6: eine Perspektivansicht einer anderen Ausführungsform eines nicht beanspruchten Leitungsverbinders, ohne die Kapselung,
- Fig. 7: eine Perspektivansicht einer anderen Ausführungsform eines erfindungsgemäßen Leitungsverbinders, mit Darstellung eines Teils der Kapselung,
- Fig. 8: eine weitere Ausführung eines nicht beanspruchten Leitungsverbinders im Längsschnitt, wobei das Heizelement mit Kunststoff umspritzt ist,
- Fig. 9: eine bevorzugte Ausführung des erfindungsgemäßen Leitungsverbinders in Perspektivansicht aus einer ersten Blickrichtung, wieder ohne Darstellung der Kapselung,
- Fig. 10: eine bevorzugte Ausführung des erfindungsgemäßen Leitungsverbinders in Perspektivansicht auf die gegenüberliegende Seite zu der gemäß Fig. 9,
- Fig. 11: einen Längsschnitt (Schnittebene XI-XI gemäß Fig. 12) des Leitungsverbinders gemäß Fig. 9 und 10 mit einer Gehäusehälfte der äußeren Kapselung und mit einer angeschlossenen Medienleitung mit zusätzlicher Umhüllung und Beheizung,
- Fig. 12: einen Schnitt in der Ebene XII-XII gemäß Fig. 11 mit beiden Gehäusehälften der Kapselung,
- Fig. 13: eine Seitenansicht einer erfindungsgemäßen konfektionierten Medienleitung zum Teil geschnitten,
- Fig. 14, 14a, 14b: eine Seitenansicht der konfektionierten Medienleitung gemäß Fig. 13 und zwei elektrische Ersatzschaltbilder für die Verschaltung der Heizdrähte und Heizleiter.

In den verschiedenen Figuren der Zeichnung sind gleiche Teile stets mit denselben Bezugszeichen versehen.

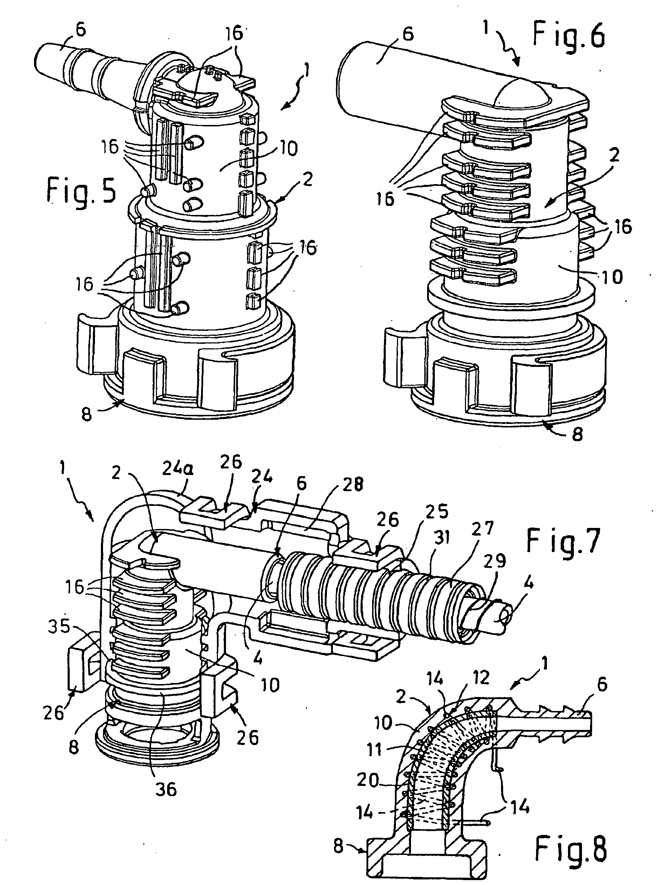

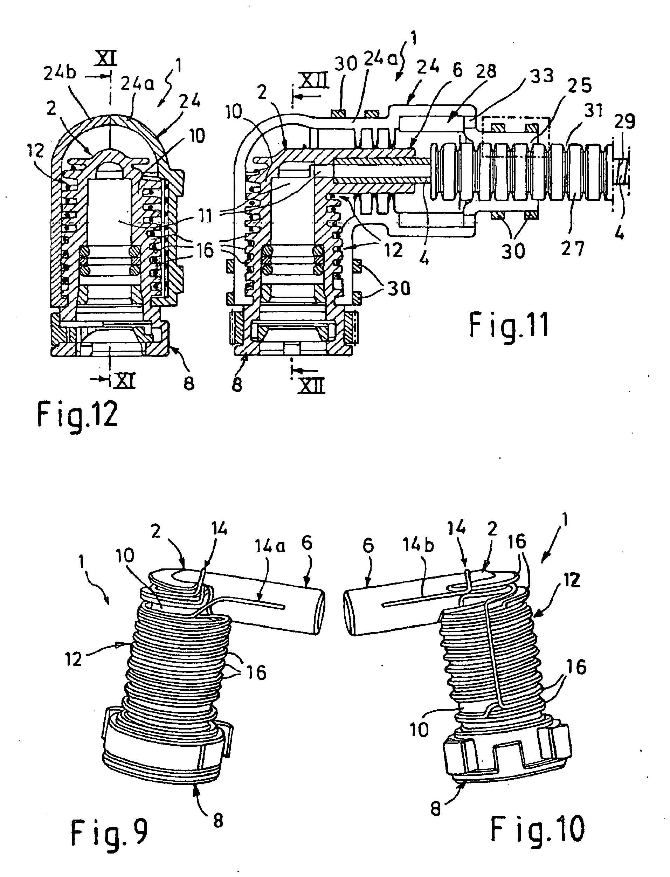

Ein erfindungsgemäßer Leitungsverbinder 1 besteht aus einem Verbinderstück 2, welches als einstückiges Formteil aus Kunststoff ausgebildet ist, insbesondere aus einem faserverstärkten Polyamid, wie PA6.6 GF30 oder PA12 GF30. Das Verbinderstück 2 weist mindestens einen Anschlussabschnitt 6 zur Anschlussverbindung mit einer Medienleitung 4 (nur in Fig. 7 und 11 dargestellt) oder mit einem beliebigen, nicht dargestellten Aggregat auf. Weiterhin weist das Verbinderstück einen dem Anschlussabschnitt 6 gegenüberliegenden weiteren Anschlussabschnitt 8 auf, der in bekannter Weise z. B. als Muffenteil für eine lösbare Steckverbindung ausgebildet ist. Der Anschlussabschnitt 8 kann aber auch als Steckabschnitt geformt sein.

In den dargestellten, bevorzugten Ausführungsbeispielen ist das Verbinderstück 2 als Winkelverbinder ausgebildet, wobei die Anschlussabschnitte 6 und 8 bezüglich ihrer Anschlussachsen einen bestimmten, beispielsweise rechten Winkel (90°) einschließen. Dabei sind die Anschlussabschnitte 6, 8 über einen Übergangsabschnitt 10 verbunden, der einen inneren, nur in Fig. 8, 11 und 12 erkennbaren Strömungskanal 11 aufweist.

Im Rahmen der Erfindung kann das Verbinderstück 2 auch eine beliebige andere, von den dargestellten Beispielen abweichende Ausgestaltung haben, z. B. als T-Stück oder Verteilerstück mit drei oder mehr Anschlussabschnitten, als geradliniger Durchgangsverbinder, als Winkelverbinder (z. B. V-Stück) mit einem beliebigen, vom rechten Winkel (90°) abweichenden Anschlussachsen-Winkel oder dergleichen.

Erfindungsgemäß weist das Verbinderstück 2 zumindest im Bereich des Übergangsabschnittes 10 elektrische Heizmittel 12 in einer den Strömungskanal 11 radial bzw. umfangsgemäß umschließenden Anordnung auf. Dadurch ist der erfindungsgemäße Leitungsverbinder 1 insbesondere für Leitungen in Kraftfahrzeugen zur Führung von gefriergefährdeten Medien, wie Wasser oder insbesondere Harnstoff, geeignet. Unter dem Begriff "Übergangsabschnitt" 10 ist der Bereich des Leitungsverbinders 1 bzw. des Verbinderstückes 2 zu verstehen, der nach Anschluss von Leitungen (4) und/oder an ein Aggregat noch "freiliegt" und deshalb mit Heizmitteln 12 versehen sein kann.

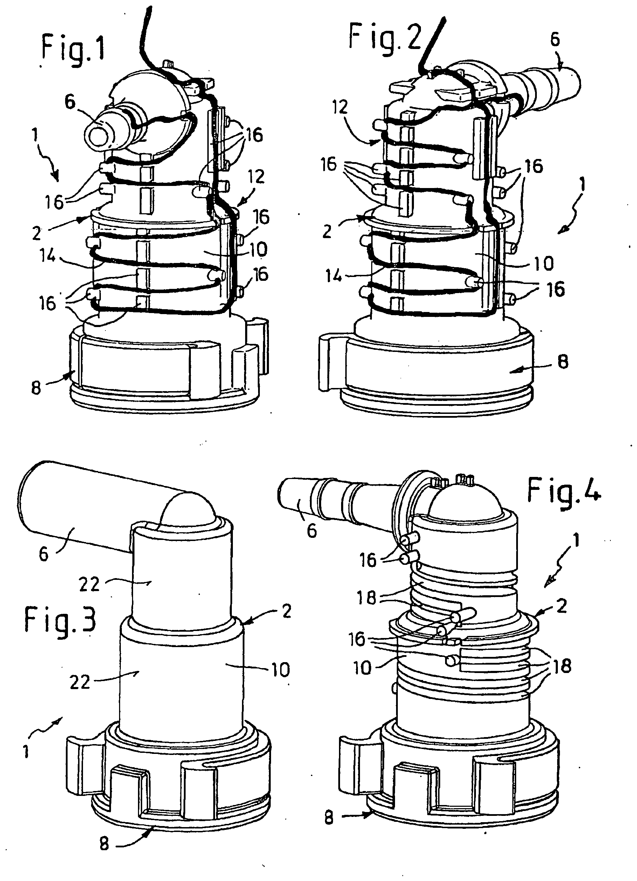

Wie sich zunächst aus Fig. 1 und 2 ergibt, kann als Heizmittel 12 mindestens ein elektrischer Heizdraht 14 (Widerstandsdraht) in einer mit einer im Wesentlichen gleichmäßigen Flächenverteilung zumindest über den Bereich des Übergangsabschnittes 10 verlaufenden Anordnung vorgesehen sein. Wie sich hierzu aus den Fig. 1, 2 sowie 4 bis 7 ergibt, weist das Verbinderstück 2 außenseitig bestimmte Formelemente zur Führung und Fixierung des außen aufgebrachten Heizdrahtes 14 auf. Als Formelemente können nach außen vorstehende Ansätze 16 bzw. Rippen und/oder - beispielsweise rillenförmige - Vertiefungen 18 (Fig. 4) vorgesehen sein. In Abhängigkeit von der Ausgestaltung und Anordnung der Formelemente 16, 18 kann der Heizdraht 14 einen beispielsweise mäanderartigen oder serpentinenartigen Verlauf zur Vermeidung einer Spulenwirkung bei Stromfluss aufweisen; vgl. dazu insbesondere Fig. 1 und 2. Alternativ dazu kann aber der Heizdraht 14 auch das Verbinderstück 2 außen spulenartig gewickelt umschließen, siehe Fig. 10 bis 12. In Fig. 4 ist dies durch einen entsprechenden, hier z. B. schraubenlinienförmigen Verlauf der rillenartigen Vertiefungen 18 angedeutet. Hierbei kann mit Vorteil im Innenbereich des Verbinderstückes 2 eine zweite, nicht erkennbare, den Strömungskanal umschließende Wicklungsspule derart angeordnet sein, dass durch einen Stromfluss durch den äußeren Heizdraht 14 eine Induktion in die innere Wicklungsspule erfolgt.

Der außen aufgebrachte Heizdraht 14 kann mit einer beispielsweise aus einem Pulverlack oder dergleichen bestehenden, isolierenden Beschichtung überdeckt sein. Es kann sich auch um eine Tauchbeschichtung handeln. Durch die isolierende Beschichtung kann der Heizdraht 14 selbst ohne eigene Isolation ausgeführt sein.

Alternativ kann nicht erfindungsgemäß der Heizdraht 14 auch in das Material des Kunststoff-Verbinderstückes 2 eingebettet (eingeformt) sein. Hierzu wird auf Fig. 8 verwiesen, wonach ein Rohrstück 20 mit dem Heizdraht 14 umwickelt und in ein Spritzwerkzeug eingelegt wird. Das mit dem Heizdraht 14 versehene Rohrstück 20 kann dann in einer beliebigen Weise mit Kunststoff umspritzt werden. Die Enden des Wicklungsdrahtes 14 sind nach außen geführt, um eine Spannung anlegen zu können. Das Rohrstück 20 kann aus Kunststoff, aber auch aus Metall bestehen, um eine gute Wärmeleitung nach innen in den Strömungskanal 11 zu erreichen.

Bei der in Fig. 3 nicht beanspruchten dargestellten Ausführungsvariante kann auf einer glatten, z. B. zylindrischen Außenfläche 22 des Verbinderstückes 2 ein nicht dargestelltes flächiges Heizelement, beispielsweise in Form einer aufgeklebten Heizfolie oder von aufgedruckten Heizleiterbahnen vorgesehen sein.

Als weitere nicht beanspruchte Ausführungsvariante kann als Heizmittel 12 auch das Material des Verbinderstückes 2 selbst elektrisch leitfähig ausgebildet sein.

Um eine hohe Wärmeleitfähigkeit zu erreichen, kann bei dem aus Kunststoff bestehenden Verbinderstück 2 das Kunststoffmaterial bestimmte Füllstoffe zur Erhöhung der Wärmeleitfähigkeit aufweisen. Als Füllstoffe sind Partikel aus Aluminium, Al₂O₃, Glas- und/oder Kohlefasern geeignet.

Wie sich zunächst aus Fig. 7 ergibt, ist das Verbinderstück 2 von einer äußeren Kapselung umschlossen. Bei der in Fig. 7 angedeuteten Ausführung kann es sich um ein zweiteiliges, aus zwei symmetrischen Gehäusehälften 24a, 24b in Form von Halbschalen (vgl. dazu auch Fig. 11 und 12) bestehendes Außengehäuse 24 handeln, von dem in Fig. 7 nur eine Gehäusehälfte 24a dargestellt ist. Dabei können die Gehäusehälften (24a, 24b) mit Vorteil über komplementäre Rastmittel 26 miteinander verbunden werden.

Alternativ ist es auch möglich, als Kapselung das gesamte Verbinderstück 2 mit einem Außengehäuse zu umspritzen. Zudem kann als Kapselung auch ein so genannter Schrumpfschlauch, Gewebeschlauch oder dergleichen vorgesehen sein. Durch die Kapselung kann zwischen dieser und dem Verbinderstück ein Luftvolumen eingeschlossen sein, wodurch eine gute Wärmeverteilung , aber auch eine thermische Isolation nach außen erreicht wird. Die äußere Beschichtung bzw. die Kapselung kann eine Wärmeisolation nach außen bewirken. Dazu ist der Kunststoff - ohne leitende Füllstoffe - mit möglichst geringer Wärmeleitfähigkeit ausgebildet.

Bei den Ausführungen mit außen aufgebrachtem Heizdraht 14 werden die Drahtenden vorzugsweise über Rastverbindungen so befestigt, dass sie zwecks Kontaktierung nach außen ragen.

Bei der in Fig. 9 bis 12 dargestellten Ausführung bilden die äußeren Ansätze 16 durch einen schraubenlinienförmigen Verlauf eine - ebenfalls entsprechend schraubenlinienförmig verlaufende - Aufnahme für den Heizdraht 14. Dabei verläuft der Heizdraht 14 gemäß Fig. 9 ausgehend von einem ersten, im Bereich der Außenfläche des Anschlussabschnittes 6 angeordneten Drahtende 14a wendelförmig über den Bereich des Übergangsabschnittes 10 und dann gemäß Fig. 10 axial zurück, so dass ein zweites Drahtende 14b ebenfalls im Bereich der Außenfläche des Anschlussabschnittes 6 liegt, und zwar vorzugsweise dem anderen Drahtende 14a etwa diametral gegenüberliegend. Auf diese Weise können die Drahtenden 14a, 14b mit Ansctilussleitem oder mit Vorteil mit Heizleitern der Medienleitung 4 elektrische verbunden werden. Somit kann der Heizdraht 14 über z. B. wendelförmige Heizleiter der Medienleitung 4 mit elektrischer Leistung (Spannung, Strom) versorgt werden.

Die Heizmittel 12 können mit einer Leistung von 3 bis 20 Watt und der Heizdraht 14 mit einer Länge von beispielsweise bis zu 200 mm ausgebildet sein. Für ein Verbinderstück 2 mit einem Innenvolumen des Strömungskanals 11 im Bereich von 0,1 bis 1,0 cm³ ist ein Leistungsquotient im Bereich von 1 bis 15 Watt / cm³ zweckmäßig. Der Heizdraht 14 kann mit negativem Temperaturkoeffizient (NTC) oder mit positivem Temperaturkoeffizient (PTC) ausgebildet sein. Eine Versorgungsspannung in der Größenordnung von 10 bis maximal 14 Volt ist zweckmäßig.

Der jeweilige Anschlussabschnitt 6 kann als Anschlussdom zum direkten Aufstecken einer Medienleitung 4 (s. hierzu die Ausführungen gemäß Fig. 1, 2, 4 und 5) oder als in eine Steckmuffe einsteckbarer Stekkerschaft (Fig. 3 und 6) ausgebildet sein.

Gemäß Fig. 7 und 9 bis 11 ist der Anschlussabschnitt 6 auch mit einer insbesondere hohlzylindrischen Form einer Aufnahme zum direkten Einstecken der Medienleitung 4 ausgebildet. Dabei wird die Medienleitung 4 vorzugsweise stoffschlüssig in dem Anschlussabschnitt 6 befestigt, beispielsweise verklebt oder verschweißt. Für ein Verschweißen mittels Laserstrahl kann der Anschlussabschnitt 6 zumindest bereichsweise aus einem lasertransparenten Material bestehen.

Wie weiterhin am Beispiel des Anschlussabschnittes 8 dargestellt ist, kann dieser auch als Steckmuffe zur Aufnahme eines Steckerschaftes ausgebildet sein. Hierbei können im Falle einer Steckverbindung beliebige Mittel zum insbesondere lösbaren Arretieren der Steckverbindungsteile vorgesehen sein. Dazu wird beispielhaft auf Fig. 11 und 12 verwiesen.

Wie sich noch aus Fig. 7 und auch aus Fig. 11 ergibt, kann es vor allem in Kombination mit der Kapselung, insbesondere in der Ausführung als Außengehäuse 24, und im Falle einer selbst ebenfalls beheizten Medienleitung 4 vorteilhaft sein, die Medienleitung 4 mit einer zusätzlichen Umhüllung 27 zu versehen, beispielsweise wie dargestellt in Form eines die Leitung 4 umschließenden Wellrohres. Die Umhüllung 27 dient zum mechanischen Schutz und zur thermischen Isolation für mindestens einen wendelförmig um die Medienleitung 4 verlaufenden Heizleiter 29. Dabei verläuft die Umhüllung 27 bis in das Außengehäuse- 24 hinein und endet kurz vor dem Anschlussabschnitt 6. In diesem Bereich kann das Außengehäuse 24 eine erweiterte Kammer 28 zur Aufnahme von nicht dargestellten elektrischen Verbindungen zwischen den Heizdrahtenden 14a, b und den Enden des Heizleiters 23 der Medienleitung 4 aufweisen.

Das Außengehäuse 24 besitzt im Einführungsbereich der Umhüllung 27, dem Wellrohr, an seiner Innenwandung umlaufende Rippen 25, die in die Wellentäler 31 des Wellrohrs hineinragen. Erfindungsgemäß wird eine Formschlussverbindung zwischen dem Außengehäuse 24 und der Umhüllung 27 gebildet. Zudem ist in Fig. 7 zu erkennen, dass ebenfalls eine Formschlussverbindung zwischen dem Außengehäuse 24 und dem Verbinderstück 2 vorhanden ist. Hierzu weist das Außengehäuse 24 im Bereich des Anschlussabschnitts 8 des Verbinderstücks 2 eine Innennut 35 auf, in die ein Ringbund 36 des Verbinderstücks 2 hineinragt.

Wie sich weiterhin aus Fig. 11 ergibt, können die Gehäusehälften 24a, b des Außengehäuses 24 auch über äußere, z. B. nach Art von Spannschellen, Spanndrähten oder Federklammer ausgebildete Halteelemente 30 verbunden sein.

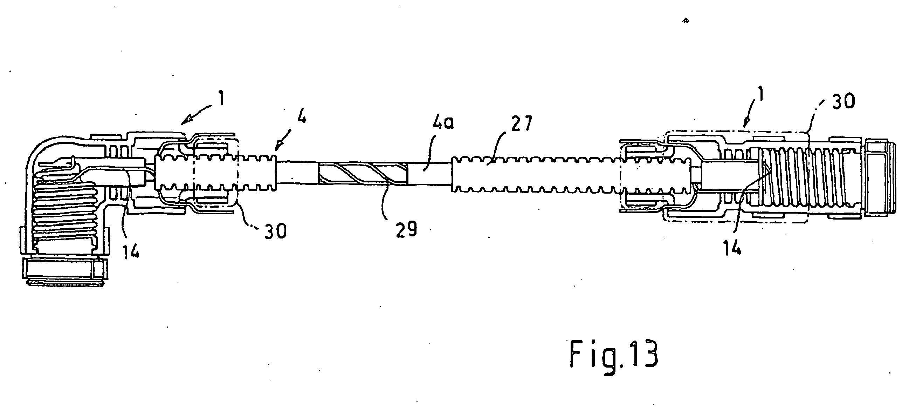

Die vorliegende Erfindung umfasst auch eine konfektionierte Medienleitung, wie sie in Fig. 13 dargestellt ist. Diese konfektionierte Medienleitung besteht aus einer inneren Rohrleitung 4a mit einem am Umfang angeordneten Heizleiter 29, wie dies bereits in Fig. 7 dargestellt ist. Die Rohrleitung 4a mit dem Heizleiter 29 wird von einer äußeren Umhüllung 27 umschlossen. Diese äußere Umhüllung 27 ist vorzugsweise als Wellrohr hergestellt. Dabei kann es sich um ein ringgewelltes oder um ein spiralgewelltes Wellrohr handeln. An den beiden Enden der derartig ausgebildeten Medienleitung 4 sind jeweils Leitungsverbinder, wie zu den Fig. 6, 7, 9 bis 10 erläutert, angeschlossen. Im dargestellten Ausführungsbeispiel ist einendig ein Leitungsverbinder 1, der als Winkelstecker ausgebildet ist, befestigt, und an dem anderen Ende ist ein gerader Steckanschluss als Leitungsverbinder 1 vorgesehen. In den dargestellten Beispielen sind die Leitungsverbinder 1 jeweils endseitig als Muffenteil ausgebildet, sie können jedoch ebenso als Steckerteil ausgebildet sein.

Wie in Fig. 13 dargestellt ist, ist die Umhüllung 27 in das Außengehäuse 24 des Leitungsverbinders 1 hineingeführt und mit dem Außengehäuse 24 formschlüssig verbunden. Der die Rohrleitung 4a umgebende Heizleiter 29 ist um diese spiralförmig umwickelt und insbesondere aus zwei parallel verlaufenden Drahtwicklungen 29a, b gebildet. Diese beiden Drahtwicklungen 29a, b können aus einem durchgehenden Draht bestehen, wobei die beiden Anschlussenden dann an dem gleichen Rohrleitungsende vorhanden sind. Sie können aber auch aus zwei separaten Drähten gebildet werden. Der Heizleiter 29 ist vorzugsweise mit einem Klebeband umwikkelt und wird dadurch auf der Rohrleitung 4a fixiert. Alternativ kann es ebenfalls möglich sein, dass der Heizleiter 29 mittels einer äußeren Lack- oder Kleberschicht auf der Rohrleitung 4a angeordnet ist. Insbesondere, wenn längs der Rohrleitung 4a unterschiedliche Heizleistungen gewünscht sind, kann die Dichte der Windungszahl und/oder der elektrische Widerstand entlang der Rohrleitung 4a variieren, so dass hierdurch abschnittsweise unterschiedliche Heizleistungen erzeugt werden können, z. B. in Siphonbereichen oder Fahrtwind beaufschlagten Bereichen der Medienleitung, bei denen eine erhöhte Gefrierneigung des Mediums besteht. Das innerhalb der Leitungsverbinder 1 vorhandene Verbinderstück 2 kann mit der Rohrleitung 4a über eine Steckverbindung verbunden sein, doch liegt es ebenfalls im Rahmen der Erfindung, wenn die Rohrleitung 4a mit dem Verbinderstück 2 stoffschlüssig beispielsweise durch Verschweißen oder Verkleben verbunden ist.

Weiterhin ist es zweckmäßig, wenn zwischen der Rohrleitung 4a und der Leitungsumhüllung 27 ein definierter Luftspalt ausgebildet ist. Dies kann beispielsweise durch die Ringwellung selbst erzielt werden oder aber durch innerhalb des Wellrohrs angeordnete Abstandshalter oder dergleichen. Zu einer besseren Abdichtung kann es erfindungsgemäß ebenfalls vorteilhaft sein, wenn zwischen dem Außengehäuse 24 des Leitungsverbinders 1 und dem Verbinderstück 2 insbesondere im Verbindungsbereich der Leitungsumhüllung 27 mit dem Leitungsverbinder 1 eine Vergussmasse 30 eingebracht ist. Die Vergussmasse 30 stellt einerseits einen mechanischen Schutz dar, sie kann andererseits auch dazu dienen, die IP-Schutzart durch Abdichtung zu verbessern. In Fig. 13 ist die Anordnung der Vergussmasse 30 durch eine Strichelung eingezeichnet. Hierbei ist sie z. B. im Übergangsbereich des Winkelsteckers 1 zur Rohrleitung 27 nur partiell als Teil-Verguss ausgebildet, und bei der geraden Steckverbindung ist die Vergussmasse 30 sowohl im Übergangsbereich zur Rohrleitung 27 als auch als äußere Umhüllung ausgebildet.

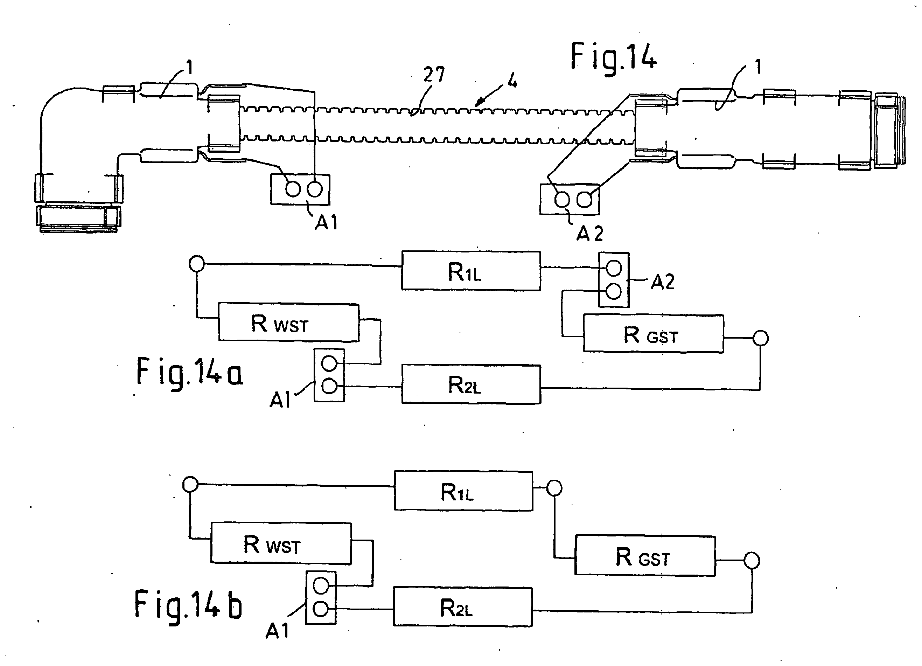

Insbesondere, wenn die erfindungsgemäßen konfektionierten Leitungen in der Nähe von Hitze erzeugenden Bauteilen verlegt werden müssen, kann es zweckmäßig sein, wenn die konfektionierte Leitung über ihre Länge gesehen ganz oder teilweise von einer Hitzeschutzschicht umgeben ist. Diese Hitzeschutzschicht- kann z. B. von einer Folie, wie einer metallisierten, Wärmestrahlung reflektierenden Folie, gebildet werden. Weiterhin kann zum mechanischen Schutz und beispielsweise zum Klapperschutz auch insbesondere um die äußere Umhüllung 27 eine polsternde Schicht, beispielsweise aus Moosgummi oder dergleichen, aufgebracht werden. Auch ist es denkbar, noch eine zusätzliche äußere thermische Isolationsschicht anzuordnen. Die Anordnung einer äußeren Umhüllung bzw. einer Schutzschicht oder Armierung ist in Fig. 14 abschnittsweise durch die Außenschicht 27a im Schnitt dargestellt. In Fig. 14 ist dargestellt, auf welche Weise die Heizdrähte 14 der Leitungsverbinder 1 und die Heizleitung 29 der Rohrleitung 4a miteinander elektrisch verschaltet werden können. In Fig. 14a ist dargestellt, dass jeweils der Heizdraht eines der Leitungsverbinder 1 mit einem der Wicklungsdrähte der Drahtwicklungen 29a, b elektrisch in Reihe geschaltet ist und die Anschlussenden dieser beiden Reihenschaltungen an beiden Leitungsverbindern 1 nach außen geführt sind, wo dann ein Anschluss einer Spannungsversorgung und/oder eine Weiterverbindung erfolgen kann. Hierbei bedeutet R_{WST} der Widerstand der Heizdrahtwicklung 14 eines Leitungsverbinders 1, der im dargestellten Beispiel als Winkelstecker ausgebildet ist, und R_{1L} der elektrische Widerstand einer der Drähte der Drahtwicklungen 29a, b, die die Rohrleitung 4a umgeben. R_{GST} ist der Widerstand des Heizdrahtes 14 des geraden Steckverbinders, und R_{2L} ist der elektrische Widerstand des anderen Wickeldrahtes der Drahtwicklung 29a, b um die Rohrleitung 4a. Die außerhalb der Leitungsverbinder 1 liegenden Anschlüsse sind jeweils mit A1 und A2 gekennzeichnet. In Fig. 14b ist eine andere Verschaltung dargestellt. Hierbei sind die Heizdrähte 14 der Leitungsverbinder 1 und die der Drahtwicklungen 29a, b um die Rohrleitung 4a derart verbunden, dass eine elektrische Reihenschaltung aller Drähte gegeben ist. Die Anschlussenden zum Anschluss einer Spannungsversorgung der Reihenschaltung sind im Bereich eines Leitungsverbinders 1 nach außen geführt, und hierbei sind die Widerstände der einzelnen Drähte wie in Fig. 14a gekennzeichnet. Hierbei ist nur ein äußerer Leitungsanschluss A1 vorhanden. Die Größe der einzelnen Widerstände kann von einer Ausführungsform einer erfindungsgemäßen konfektionierten Leitung zu einer anderen jeweils variieren und hängt von der jeweils gewünschten Heizleistung ab.

Es kann weiterhin zweckmäßig sein, die Steigung der Heizdraht-Bewicklung 14 an den Endbereichen der Rohrleitung 4a zu verringern. Eine weitere Ausgestaltung kann darin bestehen, zu der umfangsgemäßen Wicklung 14 des Heizdrahtes eine weitere Wicklung im Rohrendbereich der Rohrleitung 4a anzuordnen, um zusätzliche Drahtlänge zur Verfügung zu stellen. Hierdurch wird die Möglichkeit geschaffen, beim Kontaktieren Draht aus dem Rohrleitungsende herauszuziehen.

## Patentansprüche

1. Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei ein Anschlussabschnitt (8) als Muffenteil für eine lösbare Steckverbindung und ein Anschlussabschnitt (6) als Steckabschnitt für eine Steckverbindung der Medienleitung (4) ausgebildet ist, und wobei zumindest im Bereich des Übergangsabschnittes (10) elektrische Heizmittel (12) vorgesehen sind,
**dadurch gekennzeichnet, dass** die elektrischen Heizmittel (12) in einer den Strömungskanal (11) zumindest teilweise umschließenden Anordnung vorgesehen sind und als Heizmittel (12) mindestens ein Heizdraht (14) in einer mit einer etwa gleichmäßigen Flächenverteilung zumindest über den Bereich des Übergangsabschnittes (10) verlaufenden Anordnung vorhanden ist, und der Heizdraht (14) das Verbinderstück (2) außen spulenartig gewickelt umschließt und das Verbinderstück (2) Formelemente (16, 18) zur Führung und Fixierung des außen aufgebrachten Heizdrahtes (14) aufweist sowie das Verbinderstück (2) mit den Heizmitteln (12) von einer äußeren Kapselung umschlossen ist, wobei die Kapselung (24) mit dem Verbinderstück (2) formschlüssig verbunden ist, wobei der Anschlussabschnitt (6) als hohlzylindrische Aufnahme zum direkten Einstecken des Endes der Medienleitung (4) ausgebildet ist, wobei die Medienleitung (4) stoffschlüssig durch Verschweißen befestigbar ist.

2. Leitungsverbinder nach Anspruch 1,
**dadurch gekennzeichnet, dass** im Innenbereich mindestens eine weitere Wicklungsspule derart im Bereich des Strömungskanals (11) angeordnet ist, dass durch einen Stromfluss durch den äußeren Heizdraht (14) eine Induktion in die innere Wicklungsspule zur Erzeugung von Wärme erfolgt.

3. Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei ein Anschlussabschnitt (8) als Muffenteil für eine lösbare Steckverbindung und ein Anschlussabschnitt (6) als Steckabschnitt für eine Steckverbindung der Medienleitung (4) ausgebildet ist, und wobei zumindest im Bereich des Übergangsabschnittes (10) elektrische Heizmittel (12) vorgesehen sind,
**dadurch gekennzeichnet, dass** die elektrischen Heizmittel (12) in einer den Strömungskanal (11) zumindest teilweise umschließenden Anordnung vorgesehen sind und als Heizmittel (12) mindestens ein Heizdraht (14) in einer mit einer etwa gleichmäßigen Flächenverteilung zumindest über den Bereich des Übergangsabschnittes (10) verlaufenden Anordnung vorgesehen ist, wobei der Heizdraht (14) einen mäanderartigen Verlauf zur Vermeidung einer Spulenwirkung bei Stromfluss aufweist und das Verbinderstück (2) Formelemente (16, 18) zur Führung und Fixierung des außen aufgebrachten Heizdrahtes (14) aufweist sowie das Verbinderstück (2) mit den Heizmitteln (12) von einer äußeren Kapselung umschlossen ist, wobei die Kapselung (24) mit dem Verbinderstück (2) formschlüssig verbunden ist, wobei der Anschlussabschnitt (6) als hohlzylindrische Aufnahme zum direkten Einstecken des Endes der Medienleitung (4) ausgebildet ist, wobei die Medienleitung (4) stoffschlüssig durch Verschweißen befestigbar ist.

4. Leitungsverbinder nach einem der Ansprüche 1 bis 3,
**dadurch gekennzeichnet, dass** die äußere Kapselung (24) zur Wärmeisolation mit geringer Wärmeleitfähigkeit ausgebildet ist, wobei die Kapselung als Außengehäuse (24) insbesondere aus zwei symmetrischen Gehäusehälften (24a, 24b) gebildet ist, die zwei Halbschalen eines Außengehäuses bilden.

5. Leitungsverbinder nach einem der Ansprüche 1 bis 3,
**dadurch gekennzeichnet, dass** als Kapselung das Verbinderstück (2) mit einem Außengehäuse umspritzt ist.

6. Leitungsverbinder nach einem der Ansprüche 1 bis 4,
**dadurch gekennzeichnet, dass** die Kapselung (24) auch zum Umschließen eines Endes der Medienleitung (4) und vorzugsweise eines Endes einer Leitungs-Umhüllung (27) ausgebildet ist.

7. Leitungsverbinder nach einem der Ansprüche 1 bis 6,
**dadurch gekennzeichnet, dass** zwischen der Kapselung (24) und dem Verbinderstück (2) ein Luftvolumen zur Wärmeverteilung und -isolation eingeschlossen ist, wobei die Kapselung (24) vorzugsweise aus einem Material mit geringer Wärmeleitfähigkeit besteht.

8. Leitungsverbinder nach einem der Ansprüche 1 bis 7,
**dadurch gekennzeichnet, dass** Öffnungen (33) im Außengehäuse (24) vorhanden sind, die zum Herausführen von Verbindungsdrähten für den Anschluss der Heizmittel (12, 14) dienen, wobei diese Öffnungen (33) insbesondere in der Teilungsebene des Außengehäuses (24) liegen.

9. Leitungsverbinder nach einem der Ansprüche 1 bis 8,
**dadurch gekennzeichnet, dass** der Anschlussabschnitt (6) derart zumindest bereichsweise aus einem für Laserstrahlen transparenten Material besteht, dass die Medienleitung (4) durch Laserstrahl-Schweißen befestigbar ist.

10. Konfektionierte Medienleitung bestehend aus einer Rohrleitung (4a) mit einem am Umfang angeordneten Heizleiter (29) sowie einem mindestens an einem Rohrleitungsende der Medienleitung befestigten beheizbaren Leitungsverbinder (1), wobei der Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei ein Anschlussabschnitt (8) als Muffenteil für eine lösbare Steckverbindung und ein Anschlussabschnitt (6) als Steckabschnitt für eine Steckverbindung der Medienleitung (4) ausgebildet ist, und wobei zumindest im Bereich des Übergangsabschnittes (10) elektrische Heizmittel (12) vorgesehen sind, **dadurch gekennzeichnet, dass** die elektrischen Heizmittel (12) in einer den Strömungskanal (11) zumindest teilweise umschließenden Anordnung vorgesehen sind, und als Heizmittel (12) mindestens ein Heizdraht (14) in einer mit einer etwa gleichmäßigen Flächenverteilung zumindest über den Bereich des Übergangsabschnittes (10) verlaufenden Anordnung vorhanden ist, und der Heizdraht (14) das Verbinderstück (2) außen spulenartig gewickelt umschließt und das Verbinderstück (2) Formelemente (16, 18) zur Führung und Fixierung des außen aufgebrachten Heizdrahtes (14) aufweist, und wobei das Verbinderstück (2) mit den Heizmitteln (12) von einer äußeren Kapselung (24) umschlossen ist, wobei die Kapselung (24) mit dem Verbinderstück (2) formschlüssig verbunden ist, und wobei der Anschlussabschnitt (6) als hohlzylindrische Aufnahme zum direkten Einstecken des Endes der Medienleitung (4) ausgebildet ist, wobei die Medienleitung (4) stoffschlüssig durch Verschweißen befestigt ist.

11. Konfektionierte Medienleitung nach Anspruch 10,
**dadurch gekennzeichnet, dass** im Innenbereich mindestens eine weitere Wicklungsspule derart im Bereich des Strömungskanals (11) angeordnet ist, dass durch einen Stromfluss durch den äußeren Heizdraht (14) eine Induktion in die innere Wicklungsspule zur Erzeugung von Wärme erfolgt.

12. Konfektionierte Medienleitung bestehend aus einer Rohrleitung (4a) mit einem am Umfang angeordneten Heizleiter (29) sowie einem mindestens an einem Rohrleitungsende der Medienleitung befestigten beheizbaren Leitungsverbinder (1), wobei der Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11) wobei ein Anschlussabschnitt (8) als Muffenteil für eine lösbare Steckverbindung und ein Anschlussabschnitt (6) als Steckabschnitt für eine Steckverbindung der Medienleitung (4) ausgebildet ist, wobei zumindest im Bereich des Übergangsabschnittes (10) elektrische Heizmittel (12) vorgesehen sind, **dadurch gekennzeichnet, dass** die elektrischen Heizmittel (12) in einer den Strömungskanal (11) zumindest teilweise umschließenden Anordnung vorgesehen sind, wobei die elektrischen Heizmittel (12) des Leitungsverbinders (1) von einem Heizdraht (14) in einer mit einer etwa gleichmäßigen Flächenverteilung zumindest über den Bereich des Übergangsabschnittes (10) verlaufenen Anordnung gebildet sind, wobei der Heizdraht (14) einen mäanderartigen Verlauf zur Vermeidung einer Spulenwirkung bei Stromfluss aufweist und das Verbinderstück (2) Formelemente (16, 18) zur Führung und Fixierung des außen aufgebrachten Heizdrahtes (14) aufweist und wobei das Verbinderstück (2) mit den Heizmitteln (12) von einer äußeren Kapselung (24) umschlossen ist, und die Kapselung (24) mit dem Verbinderstück (2) formschlüssig verbunden ist, und wobei der Anschlussabschnitt (6) als hohlzylindrische Aufnahme zum direkten Einstecken des Endes der Medienleitung (4) ausgebildet ist, wobei die Medienleitung (4) stoffschlüssig durch Verschweißen befestigt ist.

13. Konfektionierte Medienleitung nach einem der Ansprüche 10 bis 12,
**dadurch gekennzeichnet, dass** die äußere Kapselung (24) zur Wärmeisolation mit geringer Wärmeleitfähigkeit ausgebildet ist, wobei die Kapselung als Außengehäuse (24) insbesondere aus zwei symmetrischen Gehäusehälften (24a, 24b) gebildet ist, die zwei Halbschalen eines Außengehäuses bilden.

14. Konfektionierte Medienleitung nach einem der Ansprüche 10 bis 12,
**dadurch gekennzeichnet, dass** als Kapselung das Verbinderstück (2) mit einem Außengehäuse umspritzt ist.

15. Konfektionierte Medienleitung nach einem der Ansprüche 10 bis 14,
**dadurch gekennzeichnet, dass** die Kapselung (24) auch zum Umschließen eines Endes der Medienleitung (4) und vorzugsweise eines Endes einer Leitungs-Umhüllung (27) ausgebildet ist.

16. Konfektionierte Medienleitung nach einem der Ansprüche 10 bis 15,
**dadurch gekennzeichnet, dass** zwischen der Kapselung (24) und dem Verbinderstück (2) ein Luftvolumen zur Wärmeverteilung und -isolation eingeschlossen ist, wobei die Kapselung (24) vorzugsweise aus einem Material mit geringer Wärmeleitfähigkeit besteht.

17. Konfektionierte Medienleitung nach einem der Ansprüche 10 bis 16,
**dadurch gekennzeichnet, dass** Öffnungen (33) im Außengehäuse (24) vorhanden sind, die zum Herausführen von Verbindungsdrähten für den Anschluss der Heizmittel (12, 14) dienen, wobei diese Öffnungen (33) insbesondere in der Teilungsebene des Außengehäuses (24) liegen.

18. Konfektionierte Medienleitung nach einem der Ansprüche 10 bis 17,
**dadurch gekennzeichnet, dass** der Anschlussabschnitt (6) derart zumindest bereichsweise aus einem für Laserstrahlen transparenten Material besteht, dass die Medienleitung (4) durch Laserstrahl-Schweißen befestigt ist.

19. Konfektionierte Medienleitung nach einem der Ansprüche 10 bis 18,
**dadurch gekennzeichnet, dass** eine Umhüllung (27), insbesondere in Form eines Wellrohrs, die den Heizleiter (29) aufweisende Rohrleitung (4a) umschließt, wobei insbesondere die Umhüllung (27) in das Außengehäuse (24) des Leitungsverbinders (1) hineingeführt ist und mit diesem formschlüssig verbunden ist.

20. Konfektionierte Medienleitung nach einem der Ansprüche 10 bis 19,
**dadurch gekennzeichnet, dass** der Heizleiter (29) die Rohrleitung (4a) spiralförmig umgibt und insbesondere aus zwei parallel verlaufenden Drahtwicklungen (29a, b) besteht und vorzugsweise der Heizleiter (29) mittels eines Klebebandes auf der Rohrleitung (4a) fixiert ist.

21. Konfektionierte Medienleitung nach einem der Ansprüche 10 bis 20,
**dadurch gekennzeichnet, dass** zwischen dem Außengehäuse (24) und dem Verbinderstück (2) sowie insbesondere im Verbindungsbereich der Leitungsumhüllung (27) innerhalb des Außengehäuses (24) eine Vergussmasse eingebracht ist.

22. Konfektionierte Medienleitung nach einem der Ansprüche 10 bis 21,
**dadurch gekennzeichnet, dass** der oder die den Verbinderkörper (2) des Leitungsverbinders (1) umgebende Heizdraht oder Heizdrähte (14) und der die Medienleitung umgebende Heizleiter (29) zueinander elektrisch zu einer Reihenschaltung oder zu zwei Reihenschaltungen geschaltet sind.

## Claims

1. Line connector (1) for connecting at least one media line, consisting of a connector piece (2), formed as a one piece formed plastic part, with at least two connection portions (6, 8) for connecting in each case to a media line (4) or to a unit, and with a transition portion (10), adjoining the connection portions (6, 8) and connecting the latter, with an inner flow duct (11), wherein one connection portion (8) is configured as a sleeve part for a releasable plug connection and one connection portion (6) is configured as a plug part for a plug connection of the media line (4), and wherein electric heating means (12) are provided at least in the region of the transition portion (10),
**characterized in that** the electric heating means (12) are provided in an arrangement at least partially enclosing the flow duct (11), and, as heating means (12), at least one heating wire (14) is present in an arrangement extending with an approximately uniform surface distribution at least over the region of the transition portion (10), and the heating wire (14) encloses the connector piece (2) externally in a manner wound in a coil-like manner, and the connector piece (2) has profiled elements (16, 18) for guiding and fixing the externally applied heating wire (14) and the connector piece (2) with the heating means (12) is enclosed by an external encapsulation (24), wherein the encapsulation (24) is connected to the connector piece (2) in a form-fitting manner, wherein the connection portion (6) is configured as a hollow-cylindrical receptacle for directly plugging in the end of the media line (4), wherein the media line (4) is able to be fastened in a materially bonded manner by welding.

2. Line connector according to Claim 1,
**characterized in that**, in the inner region, at least one further winding coil is arranged in the region of the flow duct (11) such that, as a result of a current through the outer heating wire (14), induction takes place into the inner winding coil in order to generate heat.

3. Line connector (1) for connecting at least one media line, consisting of a connector piece (2), formed as a one piece formed plastic part, with at least two connection portions (6, 8) for connecting in each case to a media line (4) or to a unit, and with a transition portion (10), adjoining the connection portions (6, 8) and connecting the latter, with an inner flow duct (11), wherein one connection portion (8) is configured as a sleeve part for a releasable plug connection and one connection portion (6) is configured as a plug part for a plug connection of the media line (4), and wherein electric heating means (12) are provided at least in the region of the transition portion (10),
**characterized in that** the electric heating means (12) are provided in an arrangement at least partially enclosing the flow duct (11), at least one heating wire (14) being provided as heating means in an arrangement extending with an approximately uniform surface distribution at least over the region of the transition portion (10), wherein the heating wire (14) has a meandering course in order to avoid a coil effect when current flows, and the connector piece (2) having profiled elements (16, 18) for guiding and fixing the externally applied heating wire (14) and the connector piece (2) with the heating means (12) is enclosed by an external encapsulation (24), wherein the encapsulation (24) is connected to the connector piece (2) in a form-fitting manner, wherein the connection portion (6) is configured as a hollow-cylindrical receptacle for directly plugging in the end of the media line (4), wherein the media line (4) is able to be fastened in a materially bonded manner by welding.

4. Line connector according to one of Claims 1 to 3,
**characterized in that** the external encapsulation (24) is configured with low thermal conductivity for thermal insulation, wherein the encapsulation is formed as an outer housing (24) made in particular of two symmetrical housing halves (24a, 24b) which form two half-shells of an outer housing.

5. Line connector according to one of Claims 1 to 3,
**characterized in that**, as encapsulation, the connector piece (2) is overmoulded with an outer housing.

6. Line connector according to one of Claims 1 to 4,
**characterized in that** the encapsulation (24) is also configured to enclose one end of the media line (4) and preferably one end of a line sheath (27).

7. Line connector according to one of Claims 1 to 6,
**characterized in that** an air volume for heat distribution and thermal insulation is included between the encapsulation (24) and the connector piece (2), wherein the encapsulation (24) consists preferably of a material with low thermal conductivity.

8. Line connector according to one of Claims 1 to 7,
**characterized in that** openings (33) are provided in the outer housing (24), which serve to pass out connecting wires for the connection of the heating means (12, 14), wherein these openings (33) are located in particular in the dividing plane of the outer housing (24).

9. Line connector according to one of Claims 1 to 8,
**characterized in that** the connection portion (6) consists at least regionally of a material that is transparent to laser beams, such that the media line (4) is able to be fastened by laser-beam welding.

10. Prefabricated media line, consisting of a pipeline (4a) with a heating conductor (29) arranged at the circumference and of a heatable line connector (1) fastened at least to one pipeline end of the media line, wherein the line connector (1) for connecting at least one media line, consisting of a connector piece (2), formed as a one piece formed plastic part, with at least two connection portions (6, 8) for connecting in each case to a media line (4) or to a unit, and with a transition portion (10), adjoining the connection portions (6, 8) and connecting the latter, with an inner flow duct (11), wherein one connection portion (8) is configured as a sleeve part for a releasable plug connection and one connection portion (6) is configured as a plug part for a plug connection of the media line (4), and wherein electric heating means (12) are provided at least in the region of the transition portion (10),
**characterized in that** the electric heating means (12) are provided in an arrangement at least partially enclosing the flow duct (11), at least one heating wire (14) is present as heating means in an arrangement extending with an approximately uniform surface distribution at least over the region of the transition portion (10), and the heating wire (14) encloses the connector piece (2) externally in a manner wound in a coil-like manner, and the connector piece (2) has profiled elements (16, 18) for guiding and fixing the externally applied heating wire (14), and wherein the connector piece (2) with the heating means (12) is enclosed by an external encapsulation (24), wherein the encapsulation (24) is connected to the connector piece (2) in a form-fitting manner, and wherein the connection portion (6) is configured as a hollow-cylindrical receptacle for directly plugging in the end of the media line (4), wherein the media line (4) is able to be fastened in a materially bonded manner by welding.

11. Prefabricated media line according to Claim 10,
**characterized in that**, in the inner region, at least one further winding coil is arranged in the region of the flow duct (11) such that, as a result of a current through the outer heating wire (14), induction takes place into the inner winding coil in order to generate heat.

12. Prefabricated media line, consisting of a pipeline (4a) with a heating conductor (29) arranged at the circumference and of a heatable line connector (1) fastened at least to one pipeline end of the media line, wherein the line connector (1) for connecting at least one media line, consisting of a connector piece (2), formed as a one piece formed plastic part, with at least two connection portions (6, 8) for connecting in each case to a media line (4) or to a unit, and with a transition portion (10), adjoining the connection portions (6, 8) and connecting the latter, with an inner flow duct (11), wherein one connection portion (8) is configured as a sleeve part for a releasable plug connection and one connection portion (6) is configured as a plug part for a plug connection of the media line (4), wherein electric heating means (12) are provided at least in the region of the transition portion (10), **characterized in that** the electric heating means (12) are provided in an arrangement at least partially enclosing the flow duct (11), wherein the electric heating means (12) of the line connector (1) are formed by a heating wire (14) in an arrangement extending with an approximately uniform surface distribution at least over the region of the transition portion (10), wherein the heating wire (14) has a meandering course in order to avoid a coil effect when current flows, and the connector piece (2) has profiled elements (16, 18) for guiding and fixing the externally applied heating wire (14), and wherein the connector piece (2) with the heating means (12) is enclosed by an external encapsulation (24), wherein the encapsulation (24) is connected to the connector piece (2) in a form-fitting manner, and wherein the connection portion (6) is configured as a hollow-cylindrical receptacle for directly plugging in the end of the media line (4), wherein the media line (4) is able to be fastened in a materially bonded manner by welding.

13. Prefabricated media line according to one of Claims 10 to 12,
**characterized in that** the external encapsulation (24) is configured with low thermal conductivity for thermal insulation, wherein the encapsulation is formed as an outer housing (24) made in particular of two symmetrical housing halves (24a, 24b) which form two half-shells of an outer housing.

14. Prefabricated media line according to one of Claims 10 to 12,
**characterized in that**, as encapsulation, the connector piece (2) is overmoulded with an outer housing.

15. Prefabricated media line according to one of Claims 10 to 14,
**characterized in that** the encapsulation (24) is also configured to enclose one end of the media line (4) and preferably one end of a line sheath (27).

16. Prefabricated media line according to one of Claims 10 to 15,
**characterized in that** an air volume for heat distribution and thermal insulation is included between the encapsulation (24) and the connector piece (2), wherein the encapsulation (24) consists preferably of a material with low thermal conductivity.

17. Prefabricated media line according to one of Claims 10 to 16,
**characterized in that** openings (33) are provided in the outer housing (24), which serve to pass out connecting wires for the connection of the heating means (12, 14), wherein these openings (33) are located in particular in the dividing plane of the outer housing (24).

18. Prefabricated media line according to one of Claims 10 to 17,
**characterized in that** the connection portion (6) consists at least regionally of a material that is transparent to laser beams, such that the media line (4) is able to be fastened by laser-beam welding.

19. Prefabricated media line according to one of Claims 10 to 18,
**characterized in that** a sheath (27), in particular in the form of a corrugated pipe, encloses the pipeline (4a) having the heating conductor (29), wherein in particular the sheath (27) leads into the outer housing (24) of the line connector (1) and is connected thereto in a form-fitting manner.

20. Prefabricated media line according to one of Claims 10 to 19,
**characterized in that** the heating conductor (29) surrounds the pipeline (4a) in a spiral manner and consists in particular of two wire windings (29a, b) extending in a parallel manner, and preferably the heating conductor (29) is fixed to the pipeline (4a) by means of an adhesive strip.

21. Prefabricated media line according to one of Claims 10 to 20,
**characterized in that**, between the outer housing (24) and the connector piece (2), and in particular in the connecting region of the line sheath (27), a casting compound has been introduced within the outer housing (24).

22. Prefabricated media line according to one of Claims 10 to 21,
**characterized in that** the heating wire or heating wires (14) surrounding the connector body (2) of the line connector (1) and the heating conductor (29) surrounding the media line are connected electrically to form a series connection or two series connections with one another.

## Revendications

1. Raccord de conduite (1) destiné au raccordement d'au moins une conduite de fluides, constitué d'une pièce de connexion (2) réalisée sous la forme d'un élément profilé en matière plastique d'une seule pièce comportant au moins deux sections de raccordement (6, 8) permettant respectivement de les raccorder à une conduite de fluides (4) ou avec un organe ainsi qu'une section de transition (10) adjacente aux sections de raccordement (6, 8) et les reliant entre elles, comportant un canal d'écoulement intérieur (11), dans lequel une section de raccordement (8) est réalisée sous la forme d'une partie d'enfichage femelle permettant une liaison par enfichage amovible et une section de raccordement (6) est réalisée sous la forme d'une section d'enfichage mâle permettant une liaison par enfichage de la conduite de fluides (4), et dans lequel il est prévu au moins dans la zone de la section de transition (10) des moyens de chauffage électriques (12),
**caractérisé en ce que** les moyens de chauffage électriques (12) sont agencés de manière à entourer au moins partiellement le canal d'écoulement (11) et **en ce qu'**en tant que moyen de chauffage (12), il est prévu au moins un fil chauffant (14) agencé de manière à s'étendre avec une répartition bidimensionnelle sensiblement régulière au moins à travers la zone de la section de transition (10), et le fil chauffant (14) entoure la pièce de connexion (2) de manière enroulée sous la forme d'une bobine extérieure et la pièce de connexion (2) comporte des éléments moulés (16, 18) permettant de guider et de fixer le fil chauffant (14) extérieur mis en place et la pièce de connexion (2), avec les moyens de chauffage (12) est entourée par une encapsulation extérieure (24), dans lequel l'encapsulation (24) est reliée par complémentarité de forme à la pièce de connexion (2), dans lequel la section de raccordement (6) est réalisée sous la forme d'un logement cylindrique creux permettant d'insérer directement l'extrémité de la conduite de fluides (4), dans lequel la conduite de fluides (4) peut être fixée par soudage avec complémentarité de matériau.

2. Raccord de conduite (1) selon la revendication 1,
**caractérisé en ce que**, dans la zone intérieure, il est prévu au moins une autre bobine d'enroulement disposée dans la zone du canal d'écoulement (11) de telle manière qu'une induction se produise dans la bobine d'enroulement intérieure par passage d'un courant à travers le fil chauffant (14) extérieur afin de produire de la chaleur.

3. Raccord de conduite (1) destiné au raccordement d'au moins une conduite de fluides, constitué d'une pièce de connexion (2) réalisée sous la forme d'un élément profilé en matière plastique d'une seule pièce comportant au moins deux sections de raccordement (6, 8) permettant respectivement de les raccorder à une conduite de fluides (4) ou avec un organe ainsi qu'une section de transition (10) adjacente aux sections de raccordement (6, 8) et les reliant entre elles, comportant un canal d'écoulement intérieur (11), dans lequel une section de raccordement (8) est réalisée sous la forme d'une partie d'enfichage femelle permettant une liaison par enfichage amovible et une section de raccordement (6) est réalisée sous la forme d'une partie d'enfichage mâle permettant une liaison par enfichage de la conduite de fluides (4), et dans lequel il est prévu au moins dans la zone de la section de transition (10) des moyens de chauffage électriques (12),
**caractérisé en ce que** les moyens de chauffage électriques (12) sont agencés de manière à entourer au moins partiellement le canal d'écoulement (11) et **en ce qu'**en tant que moyen de chauffage (12), il est prévu au moins un fil chauffant (14) agencé de manière à s'étendre avec une répartition bidimensionnelle sensiblement régulière au moins à travers la zone de la section de transition (10), dans lequel le fil chauffant (14) s'étend de manière sinueuse pour éviter un effet sur les bobines lors du passage d'un courant et la pièce de connexion (2) comporte des éléments moulés (16, 18) permettant de guider et de fixer le fil chauffant (14) extérieur mis en place et la pièce de connexion (2), avec les moyens de chauffage (12), est entourée par une encapsulation extérieure, dans lequel l'encapsulation (24) est reliée par complémentarité de forme à la pièce de connexion (2), dans lequel la section de raccordement (6) est réalisée sous la forme d'un logement cylindrique creux permettant d'insérer directement l'extrémité de la conduite de fluides (4), dans lequel la conduite de fluides (4) peut être fixée par soudage avec complémentarité de matériau.

4. Raccord de conduite selon l'une des revendications 1 à 3,
**caractérisé en ce que** l'encapsulation extérieure (24) est réalisée de manière à présenter une plus faible conductivité thermique à des fins d'isolation thermique, dans lequel l'encapsulation est réalisée sous la forme d'un boîtier extérieur notamment constitué de deux moitiés de boîtier symétriques (24a, 24b) qui forment deux demi-coques d'un boîtier extérieur.

5. Raccord de conduite selon l'une des revendications 1 à 3,
**caractérisé en ce qu'**en tant qu'encapsulation, la pièce de connexion (2) est enrobée avec un boîtier extérieur.

6. Raccord de conduite selon l'une des revendications 1 à 4,
**caractérisé en ce que** l'encapsulation (24) est également réalisée de manière à entourer une extrémité de la conduite de fluides (4) et de préférence une extrémité d'une enveloppe de conduite (27).

7. Raccord de conduite selon l'une des revendications 1 à 6,
**caractérisé en ce qu'**un volume d'air est enfermé à des fins de répartition et d'isolation thermique entre l'encapsulation (24) et la pièce de connexion (2), dans lequel l'encapsulation est de préférence constituée d'un matériau de plus faible conductivité thermique.

8. Raccord de conduite selon l'une des revendications 1 à 7,
**caractérisé en ce qu'**il est prévu dans le boîtier extérieur (24) des ouvertures (33) servant à extraire des fils de connexion destinés au raccordement des moyens de chauffage (12, 14), dans lequel lesdites ouvertures (33) se situent notamment dans le plan de division du boîtier extérieur (24).

9. Raccord de conduite selon l'une des revendications 1 à 8,
**caractérisé en ce que** la section de raccordement (6) est constituée au moins par zones d'un matériau transparent à des faisceaux laser de manière à ce que la conduite de fluides (4) puisse être fixée par soudage au moyen d'un faisceau laser.

10. Conduite de fluides confectionnée constituée d'une conduite tubulaire (4a) munie d'un conducteur chauffant (29) disposé à sa périphérie et d'un raccord de conduite (1) chauffant fixé au moins à une extrémité de conduite tubulaire de la conduite de fluides, dans laquelle le raccord de conduite (1) permettant le raccordement d'au moins une conduite de fluides, constitué d'une pièce de connexion (2) réalisée sous la forme d'un élément profilé en matière plastique d'une seule pièce comportant au moins deux sections de raccordement (6, 8) permettant respectivement de les raccorder à une conduite de fluides (4) ou avec un organe ainsi qu'une section de transition (10) adjacente aux sections de raccordement (6, 8) et les reliant entre elles, comportant un canal d'écoulement intérieur (11), dans laquelle une section de raccordement (8) est réalisée sous la forme d'une partie d'enfichage femelle permettant une liaison par enfichage amovible et une section de raccordement (6) est réalisée sous la forme d'une partie d'enfichage mâle permettant une liaison par enfichage de la conduite de fluides (4), dans laquelle il est prévu au moins dans la zone de la section de transition (10) des moyens de chauffage électriques (12), **caractérisée en ce que** les moyens de chauffage électriques (12) sont agencés de manière à entourer au moins partiellement le canal d'écoulement (11), et il est prévu, en tant que moyen de chauffage (12), au moins un fil chauffant (14) agencé de manière à s'étendre avec une répartition bidimensionnelle sensiblement régulière au moins à travers la zone de la section de transition (10), et le fil chauffant (14) entoure la pièce de connexion (2) de manière enroulée sous la forme d'une bobine extérieure et la pièce de connexion (2) comporte des éléments moulés (16, 18) permettant de guider et de fixer le fil chauffant (14) extérieur mis en place, et dans laquelle la pièce de connexion (2), avec les moyens de chauffage (12), est entourée par une encapsulation extérieure (24), dans laquelle l'encapsulation (24) est reliée par complémentarité de forme à la pièce de connexion (2), et dans laquelle la section de raccordement (6) est réalisée sous la forme d'un logement cylindrique creux permettant d'insérer directement l'extrémité de la conduite de fluides (4), dans laquelle la conduite de fluides (4) est fixée par soudage avec complémentarité de matériau.

11. Conduite de fluides confectionnée selon la revendication 10,
**caractérisée en ce que**, dans la zone intérieure, il est prévu au moins une autre bobine d'enroulement disposée dans la zone du canal d'écoulement (11) de telle manière qu'une induction se produise dans la bobine d'enroulement intérieure par passage d'un courant à travers le fil chauffant (14) extérieur afin de produire de la chaleur.

12. Conduite de fluides confectionnée constituée d'une conduite tubulaire (4a) munie d'un conducteur chauffant (29) disposé à sa périphérie et d'un raccord de conduite (1) chauffant fixé au moins à une extrémité de conduite tubulaire de la conduite de fluides, dans laquelle le raccord de conduite (1) permettant le raccordement d'au moins une conduite de fluides, constitué d'une pièce de connexion (2) réalisée sous la forme d'un élément profilé en matière plastique d'une seule pièce comportant au moins deux sections de raccordement (6) permettant respectivement de les raccorder à une conduite de fluides (4) ou avec un organe ainsi qu'une section de transition (10) adjacente aux sections de raccordement (6, 8) et les reliant entre elles, comportant un canal d'écoulement intérieur (11), dans laquelle une section de raccordement (8) est réalisée sous la forme d'une partie d'enfichage femelle permettant une liaison par enfichage amovible et une section de raccordement (6) est réalisée sous la forme d'une section d'enfichage mâle permettant une liaison par enfichage de la conduite de fluides (4), dans laquelle il est prévu au moins dans la zone de la section de transition (10) des moyens de chauffage électriques (12), **caractérisée en ce que** les moyens de chauffage électriques (12) sont agencés de manière à entourer au moins partiellement le canal d'écoulement (11), dans laquelle les moyens de chauffage électriques (12) du raccord de conduite (1) sont formés par un fil chauffant (14) agencé de manière à s'étendre avec une répartition bidimensionnelle sensiblement régulière au moins à travers la zone de la section de transition (10), dans laquelle le fil chauffant (14) s'étend de manière sinueuse pour éviter un effet sur les bobines lors du passage d'un courant et la pièce de connexion (2) comporte des éléments moulés (16, 18) permettant de guider et de fixer le fil chauffant (14) extérieur mis en place et dans laquelle la pièce de connexion (2), avec les moyens de chauffage (12), est entourée par une encapsulation extérieure (24), et l'encapsulation (24) est reliée par complémentarité de forme à la pièce de connexion (2), et dans laquelle la section de raccordement (6) est réalisée sous la forme d'un logement cylindrique creux permettant d'insérer directement l'extrémité de la conduite de fluides (4), dans laquelle la conduite de fluides (4) est fixée par soudage avec complémentarité de matériau.

13. Conduite de fluides confectionnée selon l'une des revendications 10 à 12,
**caractérisée en ce que** l'encapsulation extérieure (24) est réalisée de manière à présenter une plus faible conductivité thermique à des fins d'isolation thermique, dans laquelle l'encapsulation est réalisée sous la forme d'un boîtier extérieur (24) notamment constitué de deux moitiés de boîtier symétriques (24a, 24b) qui forment deux demi-coques d'un boîtier extérieur.

14. Conduite de fluides confectionnée selon l'une des revendications 10 à 12,
**caractérisée en ce qu'**en tant qu'encapsulation, la pièce de connexion (2) est enrobée avec un boîtier extérieur.

15. Conduite de fluides confectionnée selon l'une des revendications 10 à 14,
**caractérisée en ce que** l'encapsulation (24) est également réalisée de manière à entourer une extrémité de la conduite de fluides (4) et de préférence une extrémité d'une enveloppe de conduite (27).

16. Conduite de fluides confectionnée selon l'une des revendications 10 à 15,
**caractérisée en ce qu'**un volume d'air est enfermé à des fins de répartition et d'isolation thermique entre l'encapsulation (24) et la pièce de connexion (2), dans laquelle l'encapsulation est de préférence constituée d'un matériau de plus faible conductivité thermique.

17. Conduite de fluides confectionnée selon l'une des revendications 10 à 16,
**caractérisée en ce qu'**il est prévu dans le boîtier extérieur (24) des ouvertures (33) servant à extraire des fils de connexion destinés au raccordement des moyens de chauffage (12, 14), dans laquelle lesdites ouvertures (33) se situent notamment dans le plan de division du boîtier extérieur (24).

18. Conduite de fluides confectionnée selon l'une des revendications 10 à 17,
**caractérisée en ce que** la section de raccordement (6) est constituée au moins par zones d'un matériau transparent à des faisceaux laser de manière à ce que la conduite de fluides (4) soit fixée par soudage au moyen d'un faisceau laser.

19. Conduite de fluides confectionnée selon l'une des revendications 10 à 18,
**caractérisée en ce qu'**une enveloppe (27), notamment sous la forme d'un tube ondulé, entoure la conduite tubulaire (4a) comportant le conducteur chauffant (29), dans laquelle en particulier l'enveloppe (27) est guidée dans le boîtier extérieur (24) du raccord de conduite (1) et est reliée à celui-ci par complémentarité de forme.

20. Conduite de fluides confectionnée selon l'une des revendications 10 à 19,
**caractérisée en ce que** le conducteur chauffant (29) entoure en spirale la conduite tubulaire (4a) et est notamment constitué de deux enroulements de fil (29a, b) s'étendant parallèlement et **en ce que** le conducteur chauffant (29) est de préférence fixé à la conduite tubulaire (4a) au moyen d'un ruban adhésif.

21. Conduite de fluides confectionnée selon l'une des revendications 10 à 20,
**caractérisée en ce qu'**une masse de coulée est introduite entre le boîtier extérieur (24) et la pièce de connexion (2) et en particulier dans la zone de connexion de l'enveloppe de conduite (27), à l'intérieur du boîtier extérieur (24).

22. Conduite de fluides confectionnée selon l'une des revendications 10 à 21,
**caractérisée en ce que** le ou les fils chauffants (14) entourant le corps de connexion (2) du raccord de conduite (1) et le conducteur chauffant (29) entourant la conduite de fluides sont connectés électriquement l'un à l'autre sous la forme d'un circuit série ou de deux circuits série.
